# EUROPÄISCHE PATENTSCHRIFT

(11) **EP 3 686 910 B1**
(45) Veröffentlichungstag und Bekanntmachung des Hinweises auf die Patenterteilung: **12.03.2025**
(21) Anmeldenummer: 20152647.2
(22) Anmeldetag: 20.01.2020
(51) Int. Cl.: H01H 27/06, A01D 34/82, H01H 27/08, A01D 34/00, A01D 34/68

(54) **TRENNSCHALTERVORRICHTUNG**
DISCONNECT SWITCH DEVICE
CONTACTEUR SECTIONNEUR

(30) Priorität: 28.01.2019 DE 102019201019
(43) Veröffentlichungstag der Anmeldung: 29.07.2020
(73) Patentinhaber: Robert Bosch GmbH, 70442 Stuttgart (DE)
(72) Erfinder: Bissell, John, Claydon, Suffolk IP6 0AN (GB); Ager, Chris, Ipswich, Suffolk IP4 2SZ (GB); Stevens, Glyn, Bodorgan LL62 5PR (GB)

(56) Entgegenhaltungen:
- EP-A1- 2 657 950
- GB-A- 419 114
- GB-A- 957 088

## Beschreibung

Die Erfindung geht aus von einer Trennschaltervorrichtung nach dem Oberbegriff des Anspruchs 1.

### Stand der Technik

Aus der EP2657950 A1 ist bereits eine Trennschaltervorrichtung gemäß dem Oberbegriff des Anspruchs 1 bekannt. Der Schlüssel dieser Trennschaltervorrichtung bewirkt durch eine Rotation des Schlüssels um dessen Längsachse eine Verlagerung des Schalters von einer geöffneten in eine geschlossene Position. Ferner sei noch auf die Druckschriften GB 957 088 A und GB 419 114 A verwiesen.

### Offenbarung der Erfindung

Es wird eine Trennschaltervorrichtung mit den Merkmalen des Anspruchs 1 vorgeschlagen. Vorteilhafte Ausgestaltungen, Varianten und Weiterbildungen der Erfindung sind den Unteransprüchen zu entnehmen.

Die Erfindung geht aus von einer Trennschaltervorrichtung für eine elektrische Maschine, insbesondere für ein Gartenbearbeitungsgerät, bevorzugt in Form eines Rasenmähers. Sie umfasst einen Schlüssel, eine Schlüsselaufnahme und einen elektrischen Schalter, insbesondere einen federvorgespannten elektrischen Wippschalter. Dieser weist eine benachbart zur Schlüsselaufnahme angeordneten Betätigungsfläche auf. Es wird vorgeschlagen, dass ein Verkippen des in die Schlüsselaufnahme eingeführten Schlüssels um eine Schwenkachse, zu einer Verlagerung des Schalters von einer geöffneten in eine geschlossene Position und umgekehrt führt. Die Schwenkachse ist durch korrespondierende Schwenklagermittel an Schlüsselaufnahme und Schlüssel vorgegeben. Der Schlüssel ist im Gegensatz zur EP2657950 A1 dazu vorgesehen in der Schlüsselaufnahme Verschwenkt und nicht verdreht zu werden. Unter einem Verschwenken ist eine Schwenkbewegung quer zu Längsachse des Schlüssels zu verstehen. Die Drehbewegung der EP2657950 A1 erfolgt hingegen als Rotation um die Längsachse des Schlüssels. Das Schwenken hat den Vorteil, dass der Schlüssel aus einer insbesondere bequemen Einführposition, in eine sichere Aktivierungsposition überführt werden kann, in dem eine Penetration bzw. ein ungewolltes Umlegen des Schlüssels erschwert ist. Der Schlüssel kann zumindest in der Aktivierungsposition in die Silhouette bzw. Außenkontur des Gartengeräts abtauchen. Er bleibt somit nicht in einem Bereich an dem er beispielsweise durch Gegenstände wie Äste, Zweige oder dergleichen versehentlich umgelegt werden kann. Dadurch wird der Bedienkomfort gesteigert.

Erfindungsgemäß weist der Schlüssel eine Ausnehmung auf, die dazu vorgesehen ist, von einem Element der Schlüsselaufnahme zum Blockieren eines Abziehens des Schlüssels bei einem Schwenken des Schlüssels in der Schlüsselaufnahme durchdrungen zu werden. Die Ausnehmung ist als ein Loch im Schlüssel ausgebildet. Das Element kann insbesondere ein Fortsatz, Dorn, ein keilartiges Mittel oder dergleichen sein. Insbesondere ist die Ausnehmung bezogen auf eine bzw. die Schwenkachse des Schlüssels gegenüber einem Griffbereich angeordnet. Sie ist in dem Bereich angeordnet, der dazu vorgesehen ist vollständig in die Schlüsselaufnahme eingeführt zu werden. Sie ist insbesondere zwischen einer einem Griffbereich des Schlüssels gegenüberliegenden Front bzw. einem Betätigungsabschnitt des Schlüssels und der Schwenkachse angeordnet. Dadurch wird verhindert, dass der Schlüssel beim Verschwenken zum Aktiveren des Schalters bzw. in einer den Schalter aktivierenden Position abgezogen werden kann. Ferner kann dadurch ein Spiel des Schlüssels in der Schlüsselaufnahme, insbesondere während eines Verschwenkens des Schlüssels, beeinflusst, insbesondere verringert werden. Es kann ermöglicht werden, dass der Schlüssel nur bei vollständigem Einführen in die Schlüsselaufnahme verschwenkt werden kann. Auch dadurch wird der Komfort gesteigert.

Eine Aktivierung des Schalters, bzw. ein Verschwenken des Schlüssels, ist während des Einführens des Schlüssels nicht möglich. Das vorgenannte Element verhindert dies. Erst wenn der Schlüssel bis zu einer Position eingeschoben ist die ein Verschwenken ermöglichen soll, bzw. bis zu einem Anschlag eingesteckt ist, kann er verschwenkt und folglich der Schalter aktiviert werden.

Es wird vorgeschlagen, dass ein Element, insbesondere das vorgenannten Element eine Rampe aufweist. Sie ist dazu vorgesehen den Schlüssel beim Einstecken in die Schlüsselaufnahme innerhalb der Schlüsselaufnahme zu positionieren, insbesondere zu verschwenken, insbesondere in eine Verliersicherungsstellung und/oder eine Stellung die eine Durchdringung der Ausnahme durch das Element ermöglicht, zu positionieren. Dadurch wird eine Führung des Schlüssels beim Einführung in, und Abziehen aus der Schlüsselaufnahme, bereitgestellt. Ein verhaken des Schlüssels, Blockierprobleme oder dergleichen werden verhindert. Ein Einführwinkel kann vorgegeben bzw. eingeschränkt werden. Insbesondere auf ein komfortables Maß, insbesondere eingeschränkt auf einen Einführwinkel bzw. eine Einführwinkelabweichung von <45°.

Es wird vorgeschlagenen, das ein Element, insbesondere das vorgenannte Element, ein Führungsmittel aufweist, insbesondere ein abgewandt zur vorgenannten Rampe angeordnetes Führungsmittel, das beim Verschwenken des Schlüssels ein Spiel des Schlüssels, insbesondere ein Axialspiel des Schlüssels, in der Schlüsselaufnahme reduziert. Dadurch wird das Spiel des Schlüssels in einer in die Schlüsselaufnahmen eingeführten Position, von einer deaktivierten Stellung des Schlüssels bzw. Schalters, hin zu einer aktivierten Stellung, insbesondere zunehmend reduziert. Bei einem vollständigen Verschwenken, insbesondere bis zu einem Anschlag, kann das Spiel vollständig unterbunden werden. Dadurch kann die aufzubringende Kraft zum Verschwenken des Schlüssels, gegen den in seine "Aus-Position" federvorgespannten Schalter, konstant und/oder reproduzierbar bleiben. Zudem wird die Betätigungsfläche des Schalters zumindest annährend auf die gleiche Weise tangiert bzw. berührt. Beim Benutzer entsteht ein Gefühl der Wertigkeit. Intuitiv wird er durch das überwinden der zur Verlagerung des Schalters erforderlichen Kraft auf den Schlüssel, auf das Aktivieren des Gartengeräts hingewiesen. Ein versehentliches Betätigen des Schalters durch Verlagerung des Schlüssels wird erschwert. Die Überführung des insbesondere batteriebetriebenen Elektrogeräts in eine betriebsbereite Konfiguration (Aktivierung des Geräts über Schaltgriff(e) möglich) wird dem Nutzer intuitiv verdeutlicht. Ein versehentliches aktivieren des Elektrogeräts kann vermieden werden.

Es wird vorgeschlagen, dass innerhalb der Schlüsselaufnahme eine Barriere angeordnet ist, um ein Umlegen des Schalters ohne den Schlüssel zumindest zu erschweren, insbesondere eine zwischen der Öffnung der Schlüsselaufnahme und dem Schalter vorgesehen labyrinthartige Barriere, bevorzugt wobei die Barriere durch zumindest eines der vorgenannten Element gebildet ist. Eine Sichtverbindung auf den Schalter, insbesondere auf die niederzudrückende Betätigungsfläche des Schalters zum Aktivieren des Schalters, wird zumindest erschwert, insbesondere vermieden. Damit wird einer unachtsamen Aktivierung der Trennschaltervorrichtung vorgebeugt. Insbesondere kann kein Stock, Nagel oder ein andersartiger, im Wesentlichen gerader oder flacher Gegenstand, anstelle des Schlüssels zur Aktivierung des Schalters verwendet werden. Dadurch wird die Sicherheit der Trennschaltervorrichtung bzw. des damit versehenen elektrischen Geräts bzw. Gartengeräts, insbesondere Rasenmähers, erhöht.

Es wird vorgeschlagen, dass die Trennschaltervorrichtung Mittel aufweist, um den Schlüssel in einer abziehbereiten Position verliersicher zu halten, insbesondere durch korrespondierende Form- und/oder Kraftschlusselemente an der Schlüsselaufnahme und dem Schlüssel. Dadurch kann ein Verlust des Schlüssels beispielsweise in einer Transport- oder Aufbewahrungsposition oder - situation vermieden werden. Zur Trennung des in der Schlüsselaufnahme steckenden Schlüssels, ist eine Kraftschwelle zu überwinden. Die Form- und/oder Kraftschlusselemente stellen vorzugsweise zugleich das Schwenklager für den Schlüssel bereit oder bilden dieses teilweise aus. Vorzugsweise weist die Schlüsselaufnahme, insbesondere beidseitig des Schlüssels, eine Erhebung bzw. einen Fortsatz auf, welche(r) dazu vorgesehen ist in einer Rastvertiefung des Schlüssels einzutauchen. Somit kann vorteilhaft einerseits ein Drehlager und andererseits eine Verliersicherung bereitgestellt werden.

Es wird vorgeschlagen, dass die Schwenkachse des Schlüssels, bezüglich eines Schwerpunkts des Schlüssels, zur Seite eines Betätigungsbereichs des Schlüssels, verlagert ist. Dadurch kann erreicht werden, dass der Schlüssel in einer Einführ- oder Verliersicherungsposition am Schalter bzw. der Betätigungsfläche des Schalters anliegt. Mitunter kann die Ausnehmung zumindest teilweise mit dem vorgenannten Element interagieren, insbesondere den Schlüssel fixieren. Bei Anordnung des Schlüssels in der Einführ- oder Verliersicherungsposition, zwischen der Horizontalen und Vertikalen bezogen auf die Erde, also insbesondere einem Winkel zwischen 0 und 90°, bevorzugt 30 und 60°, besonders bevorzugt 45°, kann die auf den Schlüssel wirkende Schwerkraft, diesen zumindest am vorgenannten Element und/oder an der Betätigungsfläche des Schalters anliegen lassen, und/oder die Verliersicherung verbessern.

Es wird vorgeschlagen, dass die Schlüsselaufnahme eine Führungsfläche aufweist, insbesondere eine dem Element zugewandte, bevorzugt der Rampe des Elements zugewandte Führungsfläche aufweist, welche die Einführung des Schlüssels in die Schlüsselaufnahme in einem 20° bis 70°, insbesondere 30° bis 60°, besonders bevorzugt 45° Winkel, bezogen auf eine Bearbeitungsebene des elektrischen Geräts, insbesondere des Gartenbearbeitungsgeräts, insbesondere einer Schnittebene des Rasenmähers, erfordert. Bevorzugt liegen die Rame und die Führungsfläche in einem spitzen Winkel zueinander, beispielsweise in einem 15° Winkel. Dadurch kann der Schlüssel mit einer gewissen Winkeltoleranz zumindest initial in die Schlüsselaufnahme eingeführt werden. Ferner wird der Schlüssel beim vollständigen Einführen zentriert bzw. das Spiel verringert. Dadurch kann der Bedienkomfort gesteigert werden.

Es wird vorgeschlagen, dass der Schlüssel zwei Positionen innerhalb der Schlüsselaufnahme einnehmen kann, eine erste Position, in der der Schlüssel den Schalter aktiviert und eine zweite Position in der der Schlüssel den Schalter nicht aktiviert und/oder deaktiviert, verliersicher an der Schlüsselaufnahme gehalten ist und zugleich abziehbar ist. Somit wird zur verliersicheren Fixierung des Schlüssels keine zusätzliche Verschwenkung bzw. zusätzliche Schwenkposition des Schlüssels benötigt, beispielsweise in eine Gegenrichtung entgegen der Richtung zur Aktivierung des Schalters.

Es wird vorgeschlagen, dass der Schlüssel drei Zustände innerhalb der Schlüsselaufnahme aufweist, einen ersten Zustand in einer Position in dem durch Verkippen des Schlüssels der Schalter aktiviert ist, einen weiteren Zustand in dem der Schalter durch zurück Verkippen des Schlüssels deaktiviert ist und der Schlüssel verliersicher an der Schlüsselaufnahme gehalten ist, und einem dritten Zustand in dem der Schlüssel insbesondere zumindest ohne Wesentliche Veränderung der Verkippungsposition aus dem zweiten Zustand abziehbar ist.

Es wird vorgeschlagen, dass der Schlüssel in der ersten Position parallel zur Bearbeitungsebene des elektrischen Geräts, insbesondere des Gartenbearbeitungsgeräts, angeordnet ist und in der zweiten Position in einem 20° bis 70°, insbesondere 30° bis 60°, besonders bevorzugt 45° Winkel, bezogen auf die Bearbeitungsebene, angeordnet ist. Dadurch kann ein Bediener den Schlüssel komfortabel betätigen bzw. abziehen. Durch die parallele Anordnung in der ersten bzw. aktivierten Position, kann der Schlüssel innerhalb der Gehäusekontur verschwinden.

Es wird vorgeschlagen, dass der Schlüssel vollständig innerhalb des Umrisses des elektrischen Geräts, insbesondere Gartenbearbeitungsgeräts aufgenommen ist. Unter dem Umriss ist die Kontur bzw. Silhouette des Rasenmähers zu verstehen, insbesondere die Hüllkontur. Eine versehentliche Betätigung, insbesondere Aktivierung oder Deaktivierung des Schalters wird dadurch zumindest erschwert, insbesondere vermieden.

Es wird vorgeschlagen, dass ein Gehäuse des elektrischen Geräts, insbesondere Gartenbearbeitungsgeräts, eine Vertiefung, insbesondere eine Griffvertiefung zum Tragen des Rasenmähers aufweist, an oder in der die Schlüsselaufnahme angeordnet ist. Dadurch lässt sich der Schlüssel leicht erreichen. Ferner ist er zumindest benachbart zum Griff und kann mitunter sogar während des Tragens des elektrischen Geräts am Griff erreicht werden. Durch die Anordnung in Reichweite des Griffs, kann idealerweise in einem Arbeitsschritt - Tragen und An- /Ausschalten des elektrischen Geräts, insbesondere Gartenbearbeitungsgeräts, betätigt werden kann.

Die Trennschalteranordnung stelle eine Konfiguration bereit, bei der der Schlüssel in die Schlüsselaufnahme einführbar und von dieser entfernbar ist und der Schalter offen ist, und eine Konfiguration, bei der der Schlüssel relativ zur Schlüsselaufnahme verschwenkt ist und gegen eine Betätigungsfläche des Schalters drückt, um den Schalter zu schließen.

Die Trennschaltervorrichtung ermöglicht, dass der Schlüssel aus einem elektrisch isolierenden Material wie einem Kunststoffmaterial geformt wird, wodurch die Verwendung eines voll belasteten Wippschalters ermöglicht wird. Diese sind so konzipiert, dass Lichtbogenbildung vermieden wird, und sie stellen auch ein zuverlässiges Mittel dar, um sicherzustellen, dass der stromführende Stecker immer von der elektrischen Stromquelle getrennt ist, anstatt sich auf ein Relais zu verlassen, das möglicherweise einen Fehler entwickelt.

Obwohl die Trennschaltervorrichtung im Folgenden in Bezug auf einen Rasenmäher beschrieben ist, ist die Trennschaltervorrichtung der vorliegenden Offenbarung zur Verwendung mit jeder elektrischen Vorrichtung geeignet, in der eine Stromisolationsfunktion zum Beispiel aus Sicherheitsgründen enthalten sein soll. Es ist jedoch besonders nützlich für batteriebetriebene elektrische Geräte, insbesondere Elektrowerkzeuge, bei denen die Batterieleistung das Potenzial für einen unbeabsichtigten oder unbefugten Betrieb des Geräts bietet, besonders bevorzugt Rasenmäher, Mulcher oder Vertikutierer.

### Zeichnung

Weitere Vorteile ergeben sich aus der folgenden Zeichnungsbeschreibung. In den Zeichnungen sind mehrere Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: Eine elektrische Maschine in Form eines Rasenmähers mit einer erfindungsgemäßen Trennschaltervorrichtung;
- Fig. 2: den Schlüssel der Trennschaltervorrichtung in einer schematischen Darstellung
- Fig. 3: die Trennschaltervorrichtung in einer ersten Konfiguration in einer schematischen Darstellung;
- Fig. 4: die Trennschaltervorrichtung in einer zweiten Konfiguration in einer schematischen Darstellung
- Fig. 5: die Schlüsselaufnahme der Trennschaltervorrichtung in einer schematischen Darstellung
- Fig. 6: eine alternative Trennschaltervorrichtung, die nicht Teil der Erfindung ist, in einer schematischen Darstellung;
- Fig. 7: den Schlüssel der alternativen Trennschaltervorrichtung und die Schlüsselaufnahme in einer schematischen Darstellung;
- Fig. 8: den elektrischen Schalter in einer schematischen Darstellung.

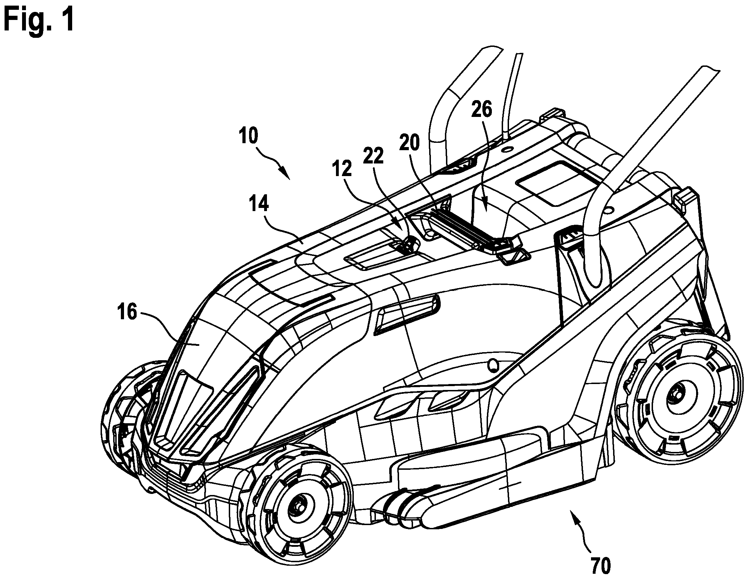

Fig. 1 zeigt einen Rasenmäher 10 als Beispiel für eine elektrische Maschine,

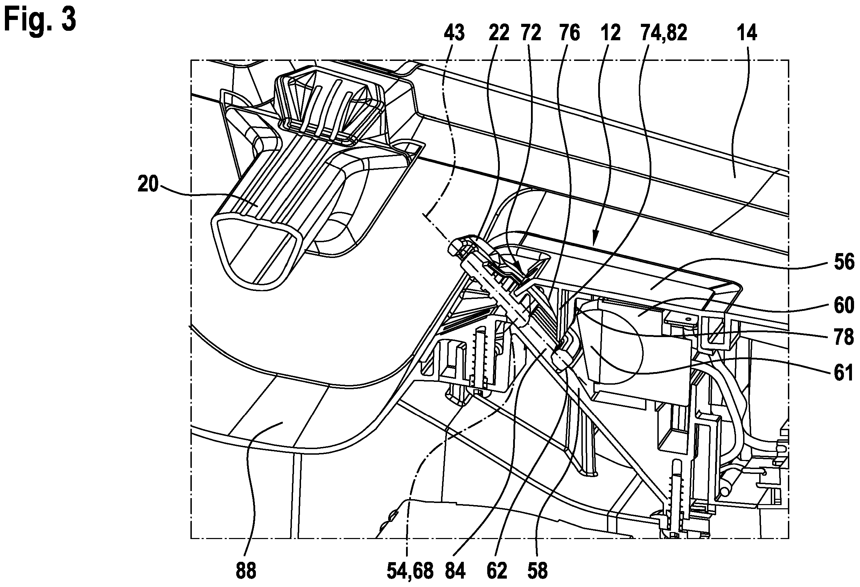

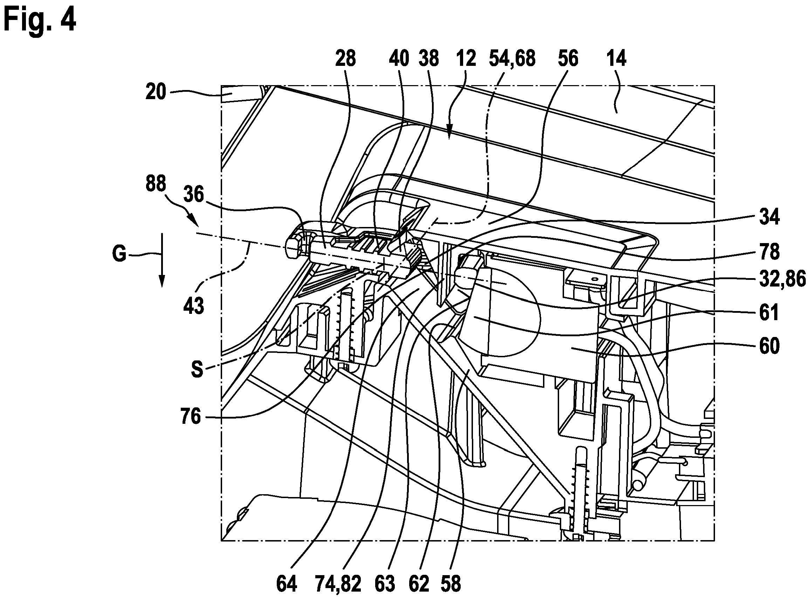

insbesondere ein Gartengerät, mit einer Trennschaltervorrichtung 12. Der Rasenmäher 10 umfasst ein Gehäuse 14, in bzw. an dem zumindest einige üblichen weitere Komponenten eines Rasenmähers 10 angeordnet sind, wie beispielsweise Motor, drehbares Messer, eine Motor- und Steuerelektronik, eine Energieversorgungseinrichtung (hier ein auswechselbar unter der Haube 16 angeordneter Akkumulator) und weitere Rasenmäher typische Bauteile. Das Gehäuse 14 ist auf Rädern 18 getragen, kann aber auch auf Ketten oder luftkissenartig abgestützt sein. In der gezeigten Ausführungsform ist die Trennschaltervorrichtung 12 im Bereich eines Tragegriffs 20 angeordnet. Ein Schlüssel 22 der Trennschaltervorrichtung 12 ist sichtbar. Er ist derart angeordnet, dass er einen Umriss bzw. die Kontur oder Silhouette des Gehäuses 14 des Rasenmähers 10, in zumindest einer Stellung bzw. Konfiguration (vgl. Fig. 4), insbesondere in der ein Schalter der Trennschaltervorrichtung aktiviert bzw. geschlossen ist, nicht überragt. Somit tritt in dieser Konfiguration der Schlüssel 22 nicht aus der Hüllkontur des Gehäuses 14 hervor, wodurch ein versehentliches Betätigen des Schlüssels 22 erschwert ist. Der Schlüssel 22 ist aus einem isolierenden Material, insbesondere Kunststoff gefertigt. Nebst der vorgenannten Konfiguration kann der Schlüssel 22 auch in die in Fig. 1 bzw. Fig. 3 dargestellte Stellung bewegt werden. In dieser Stellung ist der Schalter deaktiviert - eine Stromversorgung zwischen Batterie und Steuer- oder Regeleinheit des Rasenmähers ist unterbrochen. Eine Aktivierung des Motors bzw. des Messerbalkens oder Schneidmessers ist in dieser Konfiguration ausgeschlossen. Der Schlüssel 22 ist ferner verliersicher gehalten, kann aber insbesondere unmittelbar aus dieser Stellung abgezogen werden. Der Schlüssel 22 kann auch in beiden Stellungen bzw. Konfigurationen innerhalb der Umrisskontur des Rasenmähers 10 zum Liegen kommen. Prinzipiell kann die Trennschaltervorrichtung 12 auch an anderen Orten des Rasenmähers 10 angeordnet werden. Dadurch, dass der Schlüssel 22 im Bereich des Tragegriffs 20 des Rasenmähers 10 angeordnet ist er komfortabel erreichbar. Zudem kann er dadurch in einer Vertiefung 26 für den Tragegriff 20 geschützt vor Beschädigung. Des Weiteren kann er durch die Anordnung in der Vertiefung 26 für den Tragegriff 20 auf einfache Weise innerhalb des Umrisses des Rasenmähers 10 angeordnet werden, insbesondere für ein Umlegen und Abziehen, zugänglich bleiben; eine separate Vertiefung 26 am Rasenmäher 10, um die Zugänglichkeit zum Schlüssel 22 bequem zu ermöglichen, ist somit nicht erforderlich.

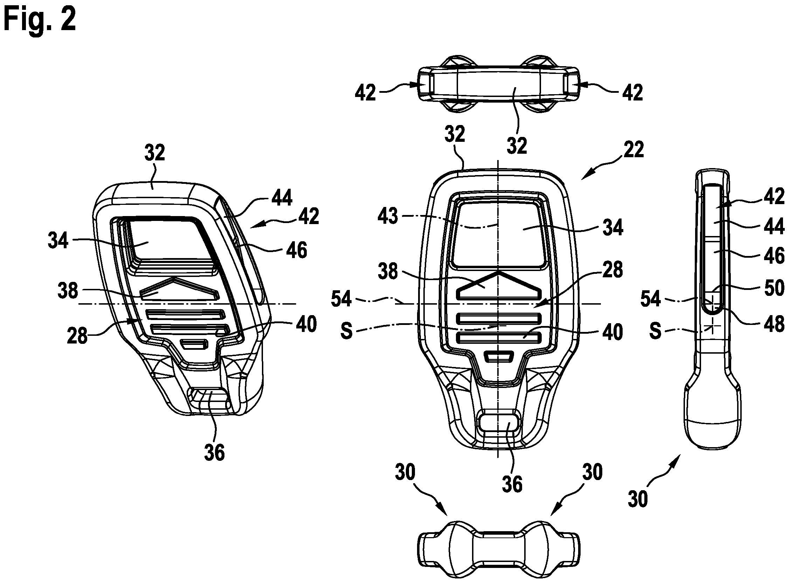

Fig. 2 zeigt eine erste Ausführungsform des Schlüssel 22 in fünf Ansichten. Der Schlüssel 22 ist symmetrisch aufgebaut, so dass die Ober- und Unterseite (mittlere Ansicht = Draufsicht) und die rechte und linke Seite (recht Ansicht = Seitenansicht) identisch sind. Dadurch kann der Schlüssel unabhängig von der Ausrichtung der Unter- oder Oberseite nach Unten- bzw. oben, also in zwei Ausrichtungen des Schlüssels in eine Schlüsselaufnahme 56 eingeführt werden. Oben ist die Frontansicht auf das einzusteckende Ende abgebildet. Unten ist die Rückansicht auf das auch in Fig. 1 sichtbare, insbesondere verdickte Ende zu sehen. Links eine perspektivische Ansicht. Der Schlüssel 22 umfasst einen Griff bzw. Griffbereich, eine Verdickung 30 und ein Schalterbetätigungsabschnitt 32. Er ist im Wesentlichen flächig ausgebildet. Ferner ist er im Wesentlichen rechteckig ausgebildet. Die Verdickung 30 verhindert, dass der Schlüssel 22 falsch herum in die Schlüsselaufnahme 56 eingesteckt wird, da die Verdickung höher ist als die Öffnung 72 der Schlüsselaufnahme 56. Somit wird der Anwender intuitiv zur korrekten Einführung des Schlüssels 22 in die Schlüsselaufnahme 56 gezwungen. Ferner weist der Schlüssel 22 eine Ausnehmung 34 auf. Ferner weist er eine Loch 36 auf mit der er beispielsweise an einem Schlüsselanhänger befestigt werden kann. Ein Symbol, hier in Form eines Pfeils 38 deutet eine Einführrichtung bzw. Einsteckrichtung an. Der Griffbereich bzw. Griff 28 weist Rippen 40 auf, die quer zur Einsteckrichtung verlaufen. Dadurch ist die Haptik verbessert. In der perspektivischen Ansicht, sowie der Front- und Seitenansicht ist ferner eine Nut 42 sichtbar. Diese Nut 42 ist jeweils seitlich am Schlüssel angeordnet. Sie weist jeweils zwei Abschnitte unterschiedlicher Steigung auf. Einen ersten Abschnitt 44 im Bereich des Schalterbetätigungsabschnitts 32, wobei sich die Nut(en) 42 bezogen auf eine Mittellängsachse 43 bzw. zueinander vom Schalterbetätigungsabschnitt 32 in Richtung des Griffs 28 spreizen, insbesondere in einem spitzen Winkel spreizen. Und einem Abschnitt 46, in dem sie parallel zur Mittellängsachse 43 verlaufen. Schließlich einem Abschnitt 48, der entweder durch eine weitere Vertiefung in dem Abschnitt 46 gebildet sein kann (hin zur Mittellängsachse 43) und/oder durch Form- und/oder Kraftschlusselemente 50, insbesondere in Form einer Verdickung, eines Hubbels oder dergleichen, die den Abschnitt 48 vom Abschnitt 46 der Nut trennen. Dieser Abschnitt 48 dient zugleich als Kipp- bzw. Schwenklager für den Schlüssel 22. Durch diesen Abschnitt 48 verläuft die Schwenkachse 54 des Schlüssels 22. Die Schwenkachse 54 ist bezogen auf einen Schwerpunkt S des Schlüssels 22 in Richtung des Schalterbetätigungsabschnitts 32 verlagert.

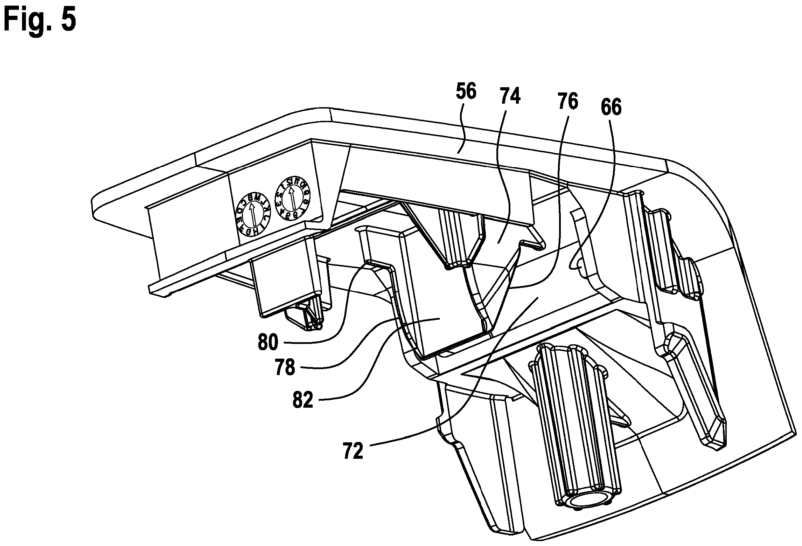

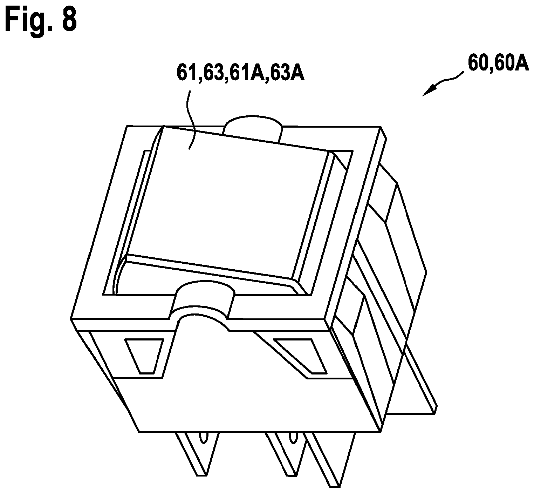

Fig. 3 zeigt einen Ausschnitt des Rasenmähers 10 der Fig. 1 in einer Schnittansicht. Der Tragegriff 20, die Trennschaltervorrichtung 12 und der Schlüssel 22 sind mittig geschnitten. Ferner ist die in Fig. 5 separat dargestellte Schlüsselaufnahme 56, sowie der in Fig. 8 separat dargestellte Schalter 60, mittig geschnitten dargestellt. Gewissermaßen bildet die Schlüsselaufnahme 56 zusammen mit einem Rasenmähergehäuseabschnitt 58, der ebenfalls mittig geschnitten dargestellt ist, die Schlüsseleinsteckaufnahme.

Die Trennschaltervorrichtung 12 ist in einer Konfiguration dargestellt, in der der Schalter 60 deaktiviert ist. Der Schlüssel 22 ist in dieser Konfiguration abziehbar, dennoch ist er vorteilhaft verliersicher gehalten. Insbesondere muss eine Kraftschwelle überwunden werden, um den Schlüssel 22 abzuziehen. Diese Kraftschwelle wird erzeugt durch die vorgenannten Form- und/oder Kraftschlusselemente 50 am Schlüssel 22, sowie korrespondierenden Form- und/oder Kraftschlusselementen 64 an der Schlüsselaufnahme 56 (vgl. Fig. 5). Ebenso kann dies zur eine Übergangspassung erreicht werden. An der Schlüsselaufnahme 56 sind dies Fortsätze 66 oder Dorne, welche in die Nut 42 des Schlüssels 22 tauchen. Die korrespondierenden Form- und/oder Kraftschlusselementen 50,64 bilden vorteilhaft eine Übergangspassung. Beim Einstecken des Schlüssels 22 müssen diese Fortsätze 66 die Form- und/oder Kraftschlusselemente 50 an der Nut 42 bzw. dem Schlüssel 22 überwinden, bzw. über diese hinübergeschoben werden. Zugleich bilden die Fortsätze 66 das Schwenklager für den Schlüssel 22. Durch sie verläuft die Schwenkachse 68 der Schlüsselaufnahme 56, welche im verbundenen Zustand von Schlüssel 22 und Schlüsselaufnahme 56 identisch mit der Schwenkachse 54 des Schlüssels 22 ist. Gemäß Fig. 3 ist der Schlüssel 22 bis zu einem Anschlag 62 in die Schlüsselaufnahme 56 eingeführt. Der Schlüssel 22 ist in etwa in einem 45° Winkel zur Bearbeitungsebene bzw. Schnittebene 70 (vgl. Fig. 1) des Rasenmähers 10 angeordnet. Der Schlüssel 22 wird durch die Öffnung 72 vgl. auch Fig. 5 in die Schlüsselaufnahme 56 eingeführt. Dabei kann er von einem Element 74 der Schlüsselaufnahme 56 geführt werden. Eine Rampe 76 der Schlüsselaufnahme 56, insbesondere des Elements 74, ist dazu vorgesehen den Schlüssel 22 beim Einstecken in die Schlüsselaufnahme 56 innerhalb der Schlüsselaufnahme 56 zu positionieren, insbesondere zu verschwenken, bzw. zu führen.

Sofern der Schlüssel 22 vollständig in die Schlüsselaufnahme 56 eingesteckt ist, befindet er sich in eine Verliersicherungsstellung und/oder eine Stellung die eine Durchdringung der Ausnehmung 34 durch das Element 74 ermöglicht.

Das Element 74 kann ferner auf einer zur Rampe 76 abgewandten Seite ein Führungsmittel 78 aufweisen. Dieses reduziert beim Verschwenken des Schlüssels 22 ein Spiel des Schlüssels 22, insbesondere ein Axialspiel des Schlüssels 22, in der Schlüsselaufnahme 56. Insbesondere reduziert das Führungsmittel 78 das Spiel bzw. Axialspiel zunehmend, bevorzugt vollständig beim vollständigen Verschwenken des Schlüssels 22 bis zu einem Anschlag 80.

Ferner ist innerhalb und/oder an der Schlüsselaufnahme 56 eine Barriere 82 angeordnet, um ein Umlegen des Schalters 60, bzw. eines Betätigungsmittels 61 des Schalters 60, bzw. dessen Betätigungsfläche 63 ohne den Schlüssel 22 zumindest zu erschweren. Insbesondere ist diese Barriere 82 zwischen der Öffnung 72 der Schlüsselaufnahme 56 und dem Schalter 60 vorgesehen, beispielsweise als labyrinthartige Barriere 82. Vorteilhaft bildet das Element 74 die Barriere 82 aus. Hier ist die Barriere 82 eine Wandung in der Breite der Ausnehmung 34.

Die Schlüsselaufnahme weist eine Führungsfläche 84 (vgl. Fig. 3 und 4) auf, insbesondere eine dem Element 74 zugewandte, bevorzugt der Rampe 76 des Elements 74 zugewandte, Führungsfläche 84. Dieser erfordert die Einführung des Schlüssels 22 in einem 20° bis 70°, insbesondere 30° bis 60°, besonders bevorzugt 45° Winkel bezogen auf die Bearbeitungsebene 70 des Rasenmähers 10. Ferner sind die Rampe 76 und die Führungsfläche 84 in einem spitzen Winkel zueinander angeordnet, hier von ~15°. Dies ermöglich eine gewisse Toleranz beim Einführen des Schlüssels 22. Der Schlüssel 22 wird während des Einführens zentriert und bis zum vollständigen Einführen auf den Einsteckwinkel von rund 45° ausgerichtet.

Fig. 4 zeigt die Trennschaltervorrichtung 12 in einer Position bzw. Konfiguration, in der der Schalter 60 aktiviert ist. Das Betätigungsmittel 61 bzw. die Betätigungsfläche 63 des Schalters 60 ist niedergedrückt. Entgegen einer Federkraft des Wippschalters hat dies ein Verschwenken des Schlüssels 22 um rund 45° um die Schwenkachse 54, 64 bewirkt. Zugleich ist die Ausnehmung 34 des Schlüssels 22 über das Element 74 gestülpt, bzw. das Element 74 ragt durch die Ausnehmung 34. Das Führungsmittel 78 hat durch seine Steigung bzw. Geometrie das Spiel des Schlüssels 22 in axialer Richtung, entlang der Mittellängsachse 43 des Schlüssels 22 eingeschränkt. Der Schlüssel 22 schlägt am Anschlag 80 an, was eine weitere Rotation des Schlüssels 22 verhindert. Zur Überführung des Schalters 60 in den geschlossenen Zustand musste eine Federkraft einer nicht dargestellten Feder des Schalters 60 überwunden werden. Dazu musste am Schlüssel 22 beim Verschwenken eine für den Nutzer spürbare Kraft aufgebracht werden, was die Aktivierung der elektrischen Vorrichtung bzw. des Rasenmähers 10 intuitiv verdeutlicht. Es wird sichtbar, dass die Ausnehmung 34 des Schlüssels 22 dazu vorgesehen ist, von dem Element 74 der Schlüsselaufnahme 56 zum Blockieren eines Abziehens des Schlüssels 22 bei einem schwenken des Schlüssels 22 in der Schlüsselaufnahme 56, durchdrungen zu werden. Insbesondere aus Fig. 3 und 4 ist ferner sichtbar, dass die Rampe 76 dazu vorgesehen ist den Schlüssel 22 beim Einstecken in die Schlüsselaufnahme 56 innerhalb der Schlüsselaufnahme 56 zu positionieren, insbesondere zu verschwenken, insbesondere in eine Verliersicherungsstellung und/oder eine Stellung die eine Durchdringung der Ausnahme durch das Element ermöglicht (vgl. jeweils Fig. 3), zu positionieren. Ferner ist sichtbar, dass das Element 74 bzw. die Barriere 82 derart angeordnet ist, dass ein Umlegen des Schalters 60 bzw. der Betätigungsfläche 63 ohne den Schlüssel 22 zumindest erschwert ist. Gewissermaßen ist eine Sichtverbindung durch die Öffnung 72 der Schlüsselaufnahme 56 unmittelbar auf die Betätigungsfläche 63 durch die Barriere 82 unmöglich - somit stellt das Element 74 eine zwischen der Öffnung 72 und dem Schalter 60 angeordnete labyrinthartige Barriere 82 dar. Zudem ist sichtbar, dass die Schwenkachse 54,68 des Schlüssels 22 bezüglich eines Schwerpunkts S des Schlüssels 22 zur Seite eines Schalterbetätigungsabschnitts 32 bzw. Betätigungsbereichs 86 des Schlüssels 22 verlagert ist. Durch die auf den Schlüssel 22 wirkende Schwerkraft G, bzw. die auf dem Schwerpunkt S um die Schwenkachse 54,68 wirkende Schwerkraft G, wirkt daher auf den Griff 28 des Schlüssels ein Moment um die Schwenkachse 54, 68 in Richtung der Schnittebene 70. Dieses reicht nicht aus den Wippschalter bzw. Schalter 60 zu betätigen, kann mitunter aber der Verliersicherung dienlich sein, und verhindert mitunter ein Klappern des Schlüssels 22 in der Schlüsselaufnahme 56. Ferner ist die gute Zugänglichkeit des Schlüssels 22 durch die Anordnung der Trennschaltervorrichtung 12 bzw. der Schlüsselaufnahme 56, bzw. des Schlüssels 22 in einer Vertiefung 88, insbesondere eine Griffvertiefung zum Tragen des Rasenmähers 10. Diese Vertiefung 88 umgibt den Tragegriff 20. Durch diese Vertiefung 88 überragt der Schlüssel 22, zumindest in der den Schalter 60 aktivierenden Stellung, nicht die Kontur des Gehäuses 14. Ein unbeabsichtigtes Umlegen des Schlüssels 22 z.B. während eines Betriebs des Rasenmähers 10 durch herabhängende Äste oder dergleichen ist erschwert.

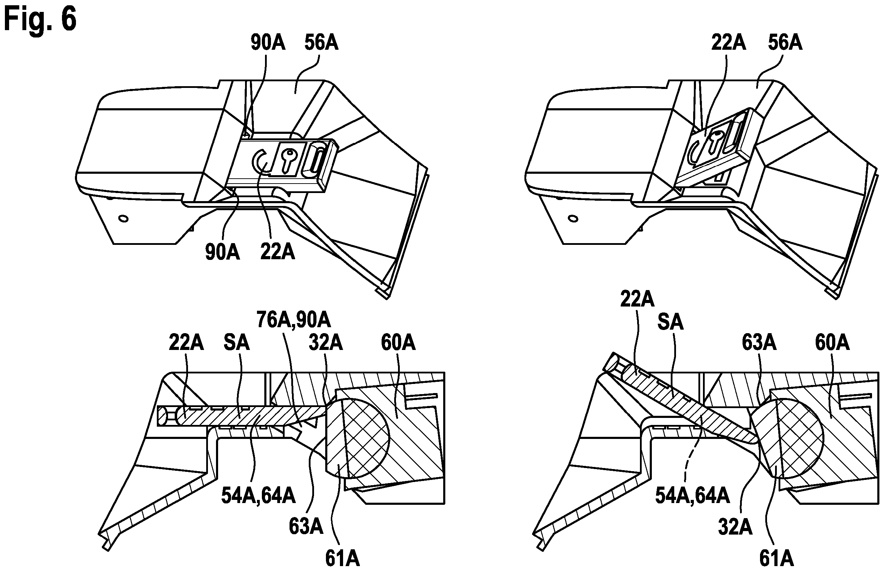

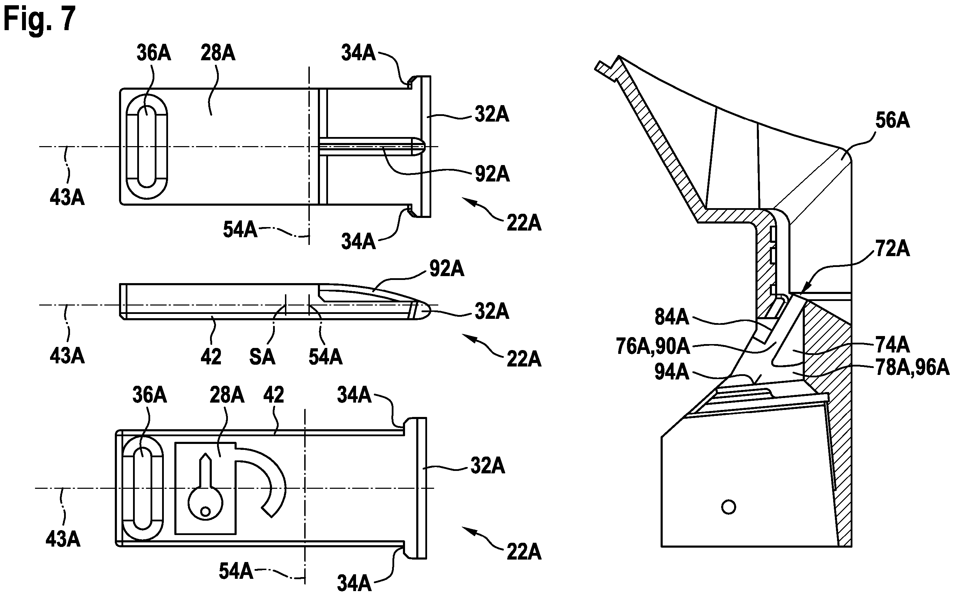

Fig. 6 stellen eine alternative Trennschaltervorrichtung 12A dar, die nicht Teil der Erfindung ist, und zeigt diese in zwei Konfigurationen und jeweils zwei Ansichten. Links in einer Konfiguration in der der Schalter 60A geschlossen ist - oben in einer perspektivischen, unten in einer geschnittenen Darstellung. Rechts in einer Konfiguration in der der Schalter 60A geöffnet ist - ebenfalls oben in einer perspektivischen, unten in einer geschnittenen Darstellung. Ferner sind Schlüssel 22A und die Schlüsselaufnahme 56A separat in Fig. 7 dargestellt - der Schlüssel in der Unter-, Seit-, und Draufsicht (links von oben nach unten); die Schlüsselaufnahme 56A rechts.

Zur leichteren Unterscheidung vom ersten Ausführungsbeispiel gemäß Fig. 2 bis 5 wurden funktional zumindest ähnliche, insbesondere gleiche Bauteile mit dem Suffix A versehen. Ein Fachmann wird die funktionale Ähnlichkeit zwischen dem ersten und zweiten Ausführungsbeispiel erkennen und die Erkenntnisse übertragen und/oder kombinieren, und mitunter weitere Ausführungen davon ableiten.

Im Unterschied zum ersten Ausführungsbeispiel erstreckt sich die Ausnehmung 34A vgl. insb. Fig. 7 im Wesentlichen beidseitig entlang der Seitenfläche des Schlüssels 22A. Einzig der Schalterbetätigungsabschnitt 32A ist etwas breiter als der restliche Schlüssel 22A ausgebildet. Dafür weist die Schlüsselaufnahme 56 A beidseitig eine Nut 90A auf. Diese Nut 90A bildet quasi ein Führungsmittel zum Einstecken des Schlüssels 22A in die Öffnung 72A der Schlüsselaufnahme. Ein vom Schalterbetätigungsabschnitt 32A breiter werdender Steg 92A ermöglicht eine Zentrierung und Ausrichtung des Schlüssels 22A. So kann der Schlüssel 22A ebenfalls mit einer gewissen Winkelvarianz von 35° + 0-30° in die Schlüsselaufnahme 56A eingeführt werden. Mit zunehmendem Einführen nährt sich der Einführungswinkel einem gewünschten Maß an - hier rund 35°. Sobald der Schlüssel 22A bis zum Anschlag 94A eingeführt ist, kann der Schalterbetätigungsabschnitt 32A aus der Nut 90A in eine weitere Nut 96A verschwenkt werden wodurch der Schalter 60A aktiviert wird. Zudem kann der Schlüssel 22A nun nicht mehr abgezogen werden. Der Schalter 60A ist ebenfalls ein Federvorgespannter Wippschalter, bei dessen Aktivierung eine Federkraft überwunden werden muss.

Nachteilig am zweiten Ausführungsbeispiel ist, dass der Schlüssel aufgrund der unterschiedlichen Ober- und Unterseite nur mit der Oberseite nach oben in die Schlüsselaufnahme 56A eingeführt werden kann. Zudem bildet das Element 74A zum Blockieren eines Abziehens nicht zugleich eine Barriere für den unsachgemäßen Gebrauch.

## Patentansprüche

1. Elektrisches Gartenbearbeitungsgerät, insbesondere Rasenmäher, mit einer Trennschaltervorrichtung (12) umfassend einen Schlüssel (22), eine Schlüsselaufnahme (56) und einen elektrischen Schalter (60), insbesondere einen federvorgespannten elektrischen Wippschalter, mit einer benachbart zur Schlüsselaufnahme (56) angeordneten Betätigungsfläche (63),
**dadurch gekennzeichnet, dass** ein Verkippen des in die Schlüsselaufnahme (56) eingeführten Schlüssels (22) um eine Schwenkachse (54, 64) quer zur Längsachse des Schlüssels, zu einer Verlagerung des Schalters (60) von einer geöffneten in eine geschlossene Position und umgekehrt führt,
und dass der Schlüssel (22) eine als Loch ausgebildete Ausnehmung (34) aufweist, die dazu vorgesehen ist, von einem Element (74) der Schlüsselaufnahme (56) zum Blockieren eines Abziehens des Schlüssels (22) bei einem schwenken des Schlüssels (22) in der Schlüsselaufnahme (56) durchdrungen zu werden.

2. Elektrisches Gartenbearbeitungsgerät nach Anspruch 1, **dadurch gekennzeichnet , dass** das Element (74), eine Rampe (76) aufweist, die dazu vorgesehen ist den Schlüssel (22) beim Einstecken in die Schlüsselaufnahme (56) innerhalb der Schlüsselaufnahme (56) zu positionieren, insbesondere in eine Verliersicherungsstellung zu positionieren die eine Durchdringung einer Ausnahme (26) durch das Element (74) ermöglicht.

3. Elektrisches Gartenbearbeitungsgerätnach Anspruch 1 oder 2, **dadurch gekennzeichnet , dass** das Element (74), ein Führungsmittel (78) aufweist, das beim Verschwenken des Schlüssels (22) ein Spiel des Schlüssels (22), in der Schlüsselaufnahme (56) reduziert, insbesondere ein Axialspiel des Schlüssels (22) in der Schlüsselaufnahme (56) reduziert.

4. Elektrisches Gartenbearbeitungsgerät nach einem der vorhergehenden Ansprüche, **dadurch gekennzeichnet, dass** innerhalb der Schlüsselaufnahme (56) eine Barriere (82) angeordnet ist, um ein Umlegen des Schalters (60) ohne den Schlüssel (22) zumindest zu erschweren, insbesondere eine zwischen der Öffnung (72) der Schlüsselaufnahme (56) und dem Schalter (60) vorgesehene labyrinthartige Barriere (82).

5. Elektrisches Gartenbearbeitungsgerät nach einem der vorhergehenden Anspruche, **dadurch gekennzeichnet, dass** die Trennschaltervorrichtung (12) Mittel aufweist um den Schlüssel (22) in einer abziehbereiten Position verliersicher zu halten, insbesondere durch korrespondierende Form- und/oder Kraftschlusselemente (50,64) an der schlusselaurnahme (56) und dem Schiüssel (22).

6. Elektrisches Gartenbearbeitungsgerät nach einem der vorhergehenden Ansprüche, **dadurch gekennzeichnet, dass** die Schwenkachse (54, 68) des Schlüssels (22), bezüglich eines Schwerpunkts (S) des Schlüssels (22), zur Seite eines Schalterbetätigungsabschnitts (32) des Schlüssels (22), verlagert ist.

7. Elektrisches Gartenbearbeitungsgerät nach einem der vorhergehenden Ansprüche, **dadurch gekennzeichnet, dass** die Schlüsselaufnahme (56) eine Führungsfläche (84) aufweist, insbesondere eine dem Element (74) zugewandte, bevorzugt der Rampe (76) des Elements (74) zugewandte, Führungsfläche (84) aufweist, welche die Einführung des Schlüssels (22) in einem 20° bis 70°, insbesondere 30° bis 60°, besonders bevorzugt 45° Winkel bezogen auf eine Bearbeitungsebene (70) des elektrischen Geräts, insbesondere Gartenbearbeitungsgeräts, insbesondere Schnittebene des Rasenmähers (10), erfordert.

8. Elektrisches Gartenbearbeitungsgerät nach einem der vorhergehenden Ansprüche, **dadurch gekennzeichnet, dass** der Schlüssel (22) zwei Positionen innerhalb der Schlüsselaufnahme einnehmen kann, eine erste Position, in der der Schlüssel (22) den Schalter (60) aktiviert und eine zweite Position in der der Schlüssel (22) den Schalter (60) deaktiviert, wobei der Schlüssel (22) verliersicher an der Schlüsselaufnahme (56) gehalten ist und zugleich abziehbar ist.

9. Elektrisches Gartenbearbeitungsgerät nach einem der vorhergehenden Ansprüche, **dadurch gekennzeichnet, dass** der Schlüssel (22) in einer ersten Position parallel zur Bearbeitungsebene (70) des elektrischen Gartenbearbeitungsgeräts angeordnet ist und in der zweiten Position in einem 20° bis 70°, insbesondere 30° bis 60°, besonders bevorzugt 45° Winkel bezogen auf die Bearbeitungsebene (70) angeordnet ist.

10. Elektrisches Gartenbearbeitungsgerät nach einem der vorhergehenden Ansprüche, **dadurch gekennzeichnet, dass** der Schlüssel (22) vollständig innerhalb des Umrisses des Gehäuses (14) des elektrischen Gartenbearbeitungsgeräts, aufgenommen ist.

11. Elektrisches Gartenbearbeitungsgerät nach einem der vorhergehenden Ansprüche, **dadurch gekennzeichnet, dass** das Gehäuse (14) des elektrischen Gartenbearbeitungsgeräts, eine Vertiefung (26), insbesondere eine Griffvertiefung zum Tragen des Rasenmähers aufweist, an oder in der die Schlüsselaufnahme (56) und/oder der Schlüssel (22) angeordnet ist.

## Claims

1. Electric gardening work appliance, in particular a lawnmower, having a switch disconnector device (12) comprising a key (22), a key receptacle (56) and an electrical switch (60), in particular a spring-preloaded electrical rocker switch, with an actuating surface (63) arranged adjacent to the key receptacle (56),
**characterized in that** tilting of the key (22), which is inserted into the key receptacle (56), about a pivot axis (54, 64) transversely to the longitudinal axis of the key leads to displacement of the switch (60) from an open position to a closed position and vice versa,
and **in that** the key (22) has a recess (34) which is in the form of a hole and an element (74) of the key receptacle (56) is intended to penetrate the recess in order to block removal of the key (22) when the key (22) is pivoted in the key receptacle (56).

2. Electric gardening work appliance according to Claim 1, **characterized in that** the element (74) has a ramp (76) which is intended to position the key (22), when it is inserted into the key receptacle (56), within the key receptacle (56), in particular to position the key in a captive position which allows the element (74) to penetrate a cutout (26).

3. Electric gardening work appliance according to Claim 1 or 2, **characterized in that** the element (74) has a guide means (78) which, when the key (22) is pivoted, reduces play of the key (22) in the key receptacle (56), in particular reduces axial play of the key (22) in the key receptacle (56).

4. Electric gardening work appliance according to any of the preceding claims, **characterized in that** a barrier (82) is arranged within the key receptacle (56) in order to at least make it difficult to move the switch (60) without the key (22), in particular a labyrinthine barrier (82) provided between the opening (72) of the key receptacle (56) and the switch (60).

5. Electric gardening work appliance according to any of the preceding claims, **characterized in that** the switch disconnector device (12) has means to captively hold the key (22) in a ready-to-remove position, in particular by corresponding interlocking and/or force-fitting elements (50, 64) on the key receptacle (56) and the key (22).

6. Electric gardening work appliance according to any of the preceding claims, **characterized in that** the pivot axis (54, 68) of the key (22) is displaced, with respect to a centre of gravity (S) of the key (22), to the side of a switch actuating portion (32) of the key (22).

7. Electric gardening work appliance according to any of the preceding claims, **characterized in that** the key receptacle (56) has a guide surface (84), in particular has a guide surface (84) which faces the element (74), preferably faces the ramp (76) of the element (74), and requires the insertion of the key (22) at a 20° to 70°, in particular 30° to 60°, particularly preferably 45°, angle with respect to a work plane (70) of the electric appliance, in particular the gardening work appliance, in particular the cutting plane of the lawnmower (10).

8. Electric gardening work appliance according to any of the preceding claims, **characterized in that** the key (22) can assume two positions within the key receptacle, a first position in which the key (22) activates the switch (60) and a second position in which the key (22) deactivates the switch (60), wherein the key (22) is captively held on the key receptacle (56) and at the same time is removable.

9. Electric gardening work appliance according to any of the preceding claims, **characterized in that** the key (22) is arranged parallel to the work plane (70) of the electric gardening work appliance in a first position and is arranged at a 20° to 70°, in particular 30° to 60°, particularly preferably 45°, angle with respect to the work plane (70) in the second position.

10. Electric gardening work appliance according to any of the preceding claims, **characterized in that** the key (22) is fully received within the periphery of the housing (14) of the electric gardening work appliance.

11. Electric gardening work appliance according to any of the preceding claims, **characterized in that** the housing (14) of the electric gardening work appliance has a depression (26), in particular a grip depression for carrying the lawnmower, on or in which the key receptacle (56) and/or the key (22) is arranged.

## Revendications

1. Appareil électrique de jardinage, notamment tondeuse à gazon, comprenant un dispositif sectionneur (12) qui comporte une clé (22), un logement de clé (56) et un interrupteur électrique (60), notamment un interrupteur électrique à bascule précontraint par ressort, avec une surface d'actionnement (63) disposée voisine du logement de clé (56),
**caractérisé en ce qu'**un basculement de la clé (22) insérée dans le logement de clé (56) autour d'un axe de pivotement (54, 64) transversal à l'axe longitudinal de la clé entraîne un déplacement de l'interrupteur (60) d'une position ouverte à une position fermée et inversement,
et **en ce que** la clé (22) possède un évidement (34) réalisé sous la forme d'un trou, lequel est prévu pour être traversé par un élément (74) du logement de clé (56) pour bloquer un retrait de la clé (22) lors d'un pivotement de la clé (22) dans le logement de clé (56).

2. Appareil électrique de jardinage selon la revendication 1, **caractérisé en ce que** l'élément (74) possède une rampe (76) qui est prévue pour positionner la clé (22) à l'intérieur du logement de clé (56) lors de l'insertion dans le logement de clé (56), notamment pour la positionner dans une position anti-perte qui permet une traversée d'une exception (26) par l'élément (74).

3. Outil électrique de jardinage selon la revendication 1 ou 2, **caractérisé en ce que** l'élément (74) possède un moyen de guidage (78) qui, lors du pivotement de la clé (22), réduit un jeu de la clé (22) dans le logement de clé (56), réduit notamment un jeu axial de la clé (22) dans le logement de clé (56).

4. Appareil électrique de jardinage selon l'une des revendications précédentes, **caractérisé en ce qu'**une barrière (82) est disposée à l'intérieur du logement de clé (56) au moins afin de rendre difficile un basculement de l'interrupteur (60) sans la clé (22), notamment une barrière (82) de type labyrinthe présente entre l'ouverture (72) du logement de clé (56) et l'interrupteur (60).

5. Appareil électrique de jardinage selon l'une des revendications précédentes, **caractérisé en ce que** le dispositif sectionneur (12) possède des moyens pour maintenir la clé (22) de manière imperdable dans une position prête à être retirée, notamment par le biais d'éléments à complémentarité de forme et/ou d'adhérence (50, 64) correspondants au niveau du logement de clé (56) et de la clé (22).

6. Appareil électrique de jardinage selon l'une des revendications précédentes, **caractérisé en ce que** l'axe de pivotement (54, 68) de la clé (22) est décalé, par rapport à un centre de gravité (S) de la clé (22), vers le côté d'une portion d'actionnement d'interrupteur (32) de la clé (22).

7. Appareil électrique de jardinage selon l'une des revendications précédentes, **caractérisé en ce que** le logement de clé (56) possède une surface de guidage (84), notamment une surface de guidage (84) faisant face à l'élément (74), de préférence faisant face à la rampe (76) de l'élément (74), laquelle re-quiert l'introduction de la clé (22) selon un angle de 20° à 70°, notamment de 30° à 60°, de préférence de 45° par rapport à un plan de traitement (70) de l'appareil électrique, notamment de l'appareil de jardinage, en particulier du plan de coupe de la tondeuse à gazon (10).

8. Appareil électrique de jardinage selon l'une des revendications précédentes, **caractérisé en ce que** la clé (22) peut adopter deux positions à l'intérieur du logement de clé, une première position dans laquelle la clé (22) active l'interrupteur (60) et une deuxième position dans laquelle la clé (22) désactive l'interrupteur (60), la clé (22) étant maintenue au niveau du logement de clé (56) de manière imperdable et en même temps de manière à pouvoir être retirée.

9. Appareil électrique de jardinage selon l'une des revendications précédentes, **caractérisé en ce que** la clé (22), dans une première position, est disposée parallèlement au plan de travail (70) de l'appareil électrique de jardinage et, dans la deuxième position, est disposée selon un angle de 20° à 70°, notamment de 30° à 60°, de manière particulièrement préférée de 45° par rapport au plan de traitement (70).

10. Appareil électrique de jardinage selon l'une des revendications précédentes, **caractérisé en ce que** la clé (22) est entièrement logée à l'intérieur du contour du boîtier (14) de l'appareil électrique de jardinage.

11. Appareil électrique de jardinage selon l'une des revendications précédentes, **caractérisé en ce que** le boîtier (14) de l'appareil électrique de jardinage possède un renfoncement (26), notamment un renfoncement de préhension destiné à porter la tondeuse à gazon, au niveau duquel ou dans lequel est disposé le logement de clé (56) et/ou la clé (22).
